# EUROPÄISCHE PATENTSCHRIFT

(11) **EP 4 202 126 B1**
(45) Veröffentlichungstag und Bekanntmachung des Hinweises auf die Patenterteilung: **17.06.2026**
(21) Anmeldenummer: 21216632.6
(22) Anmeldetag: 21.12.2021
(51) Int. Cl.: E01H 1/08, A01G 20/47

(54) **ELEKTRISCHES BLASGERÄT MIT EINEM AKKUPACK**
ELECTRIC BLOWING DEVICE WITH A RECHARGEABLE BATTERY PACK
SOUFFLEUSE ÉLECTRIQUE DOTÉE D'UN BLOC D'ACCUMULATEUR

(43) Veröffentlichungstag der Anmeldung: 28.06.2023
(73) Patentinhaber: Andreas Stihl AG & Co. KG, 71336 Waiblingen (DE)
(72) Erfinder: MANDEL, Roland, 70329 Stuttgart (DE); PIEKAREK, Sebastian, 70567 Stuttgart (DE); KÖNIG, Markus, 70771 Leinfelden-Echterdingen (DE); HEIN, Andrea, 71139 Ehningen (DE)
(74) Vertreter: Wasmuth, Rolf

(56) Entgegenhaltungen:
- WO-A1-2020/161421
- US-A1- 2016 108 924
- US-A1- 2016 198 636

## Beschreibung

Die Erfindung betrifft ein elektrisches Blasgerät mit einer Rückenplatte zum Tragen auf dem Rücken eines Benutzers. Die Rückenplatte hat eine in Hochrichtung verlaufende Plattenachse und besteht zumindest aus einem ersten, oberen Plattenabschnitt sowie einem zweiten, unteren Plattenabschnitt, die in Hochrichtung der Plattenachse hintereinander liegen. Die Gebläsespirale weist einen Blasluftauslass auf und trägt auf einer der Rückenplatte zugewandt liegenden axialen Stirnseite einen Elektromotor, dessen Antriebswelle mit einem in der Gebläsespirale drehenden Gebläserad verbunden ist. Als elektrische Energiequelle ist zumindest ein Akkupack vorgesehen. Der zum Betrieb des elektrischen Blasgerätes notwendige Akkupack ist zusammen mit dem Blasgerät mit der Rückenplatte zu tragen.

Um eine ausreichende Betriebsdauer zu erzielen ist bekannt, mehrere Akkupacks anzuordnen, wie in der US 2016/198636 A1 beschrieben. Da Akkupacks ein nicht unerhebliches Gewicht aufweisen, wird die auf dem Rücken des Benutzers zu tragende Last erhöht. Ist ein Akkupack leer und muss zum Laden entnommen oder gegen einen geladenen Akkupack ausgetauscht werden, ist eine gute Zugänglichkeit eines Akkupacks erwünscht. Da darüber hinaus der Akkupack elektrische Kontakte zur Übertragung der elektrischen Energie aufweist, sollte auch sichergestellt sein, dass der Akkupack möglichst nicht im Schmutzbereich eines Blasgerätes angeordnet ist. Daneben sind auch die Gewichtsverteilung der mit der Rückenplatte zu tragenden Last und damit der Ort der Anordnung eines Akkupacks von Bedeutung.

Der Erfindung liegt die Aufgabe zugrunde, ein elektrisches Blasgerät derart weiterzubilden, dass bei angemessener Gewichtsverteilung mindestens ein zum Betrieb notwendiger Akkupack derart angeordnet ist, dass einerseits eine gute Zugänglichkeit für einen Akkuwechsel gegeben ist und andererseits der mindestens eine Akkupack in einem möglichst wenig schmutzbelasteten Raumbereich liegt.

Die Aufgabe wird nach den Merkmalen des Anspruchs 1 gelöst.

Die Rückenplatte weist eine in Hochrichtung der Rückenplatte verlaufende Plattenachse auf. Für den Betrieb des elektrischen Blasgeräts sind zwei Akkupacks vorgesehen, die jeweils auf einer Hochseite der Plattenachse angeordnet sind. Zwischen dem ersten, oberen Plattenabschnitt der Rückenplatte und der Gebläsespirale ist erfindungsgemäß ein Aufnahmeraum für die Akkupacks ausgebildet. In diesem Aufnahmeraum sind die Gehäuseschächte für die Akkupacks gehalten. Jeder Gehäuseschacht weist eine Einschuböffnung für einen Akkupack auf, der dem Elektromotor abgewandt liegt. Die Einschuböffnung liegt dem oberen Ende der Rückenplatte zugewandt, also nach oben gewandt, wodurch die Gefahr einer Verschmutzung gering ist. Durch die Anordnung der Akkupacks oberhalb des Elektromotors im Bereich des oberen Plattenabschnitts der Rückenplatte ist ein hoher Schwerpunkt erzielt, der den Tragekomfort des rückengetragenen Blasgerätes signifikant erhöht. In der Ansicht von hinten liegt ein Akkupack auf der einen Seite der mittig verlaufenden Plattenachse und ein Akkupack auf der anderen Seite der mittig verlaufenden Plattenachse. Darüber hinaus ist durch die Lage der Einschuböffnung oberhalb des Elektromotors eine gute Zugänglichkeit zur Einschuböffnung zum Einsetzen oder Entnehmen der Akkupacks gegeben.

In Weiterbildung der Erfindung weist jeder Gehäuseschacht eine durch die Einschuböffnung verlaufende Hochachse auf. Die konstruktive Anordnung der Gehäuseschächte in dem Aufnahmeraum ist so gewählt, dass die jeweilige Hochachse mit einem globalen oder räumlichen Neigungswinkel zur Plattenachse liegt. Dadurch ist die Zugänglichkeit zur Einschuböffnung zum Auswechseln der Akkupacks weiter verbessert.

Als räumlicher Neigungswinkel ist ein Winkel zu verstehen, der sowohl seitlich zur Plattenachse geneigt liegen und/oder auch in anderen Raumrichtungen zur Plattenachse geneigt liegen kann.

Der räumliche oder allgemeine Neigungswinkel der Hochachse jedes Gehäuseschachtes kann derart ausgebildet sein, dass in Draufsicht auf die Rückenplatte die Hochachse mit einem ersten Neigungswinkel zur Plattenachse seitlich geneigt liegt. Durch die seitliche Neigung zur Plattenachse wird eine leichtere Zugänglichkeit zur Einschuböffnung des Gehäuseschachtes erreicht.

Der räumliche oder allgemeine Neigungswinkel kann auch derart ausgebildet sein, dass die Hochachse jedes Gehäuseschachtes zur Ebene der Rückenplatte mit einem zweiten Neigungswinkel geneigt liegt, insbesondere nach hinten geneigt liegt. Mit dem Ausdruck nach hinten geneigt ist ein Neigungswinkel angegeben, durch den der jeweilige Gehäuseschacht im Bereich seiner Einschuböffnung einen größeren Abstand zur Rückenplatte einnimmt als im Bereich seines Bodens. Dadurch ergibt sich für den jeweiligen Akkupack eine Einschubrichtung in den Gehäuseschacht von schräg hinten, wodurch eine bessere Zugänglichkeit gegeben ist.

In besonderer Ausgestaltung der Erfindung kann der allgemeine bzw. globale Neigungswinkel sich aus dem ersten, seitlichen Neigungswinkel zur Plattenachse sowie aus dem zur Ebene der Rückenplatte gebildeten zweiten Neigungswinkel zusammensetzen. Dadurch ergibt sich ein zusammengesetzter räumlicher Neigungswinkel, durch den eine seitliche, schräg zur Rückenplatte verlaufende Einschubrichtung für jeden Akkupack in den jeweiligen Gehäuseschacht erzielt ist.

Der erste, seitliche Neigungswinkel und/oder der zur Ebene der Rückenplatte ausgebildete zweite Neigungswinkel liegt zweckmäßig zwischen 2° bis 15°. Vorteilhaft ist ein Winkelbereich zwischen 5° bis 10°. In besonderer Ausgestaltung der Erfindung sind die Neigungswinkel mit 10° gewählt.

Leistungsstarke Akkupacks haben neben einem hohen Gewicht einen großen Raumbedarf. Vorteilhaft ist daher vorgesehen, die Gebläsespirale zur Rückenplatte unter einem Gehäusewinkel geneigt anzuordnen. Der Gehäusewinkel der Gebläsespirale ist derart gewählt, dass die Gebläsespirale zu dem ersten, oberen Plattenabschnitt der Rückenplatte einen größeren Abstand aufweist als der Abstand, den die Gebläsespirale zu dem zweiten, unteren Plattenabschnitt der Rückenplatte aufweist. In dem Raumbereich mit dem größeren Abstand der Gebläsespirale zur Rückenplatte sind die Gehäuseschächte vorgesehen. Aufgrund der Schrägstellung können die Gehäuseschächte in den Raumbereich zwischen Rückenplatte und Gebläsespirale abgesenkt werden. Vorteilhaft liegt die Einschuböffnung jedes Gehäuseschachtes etwa auf einer Ebene mit der Oberkante der Gebläsespirale.

Die Einschuböffnung und die Hochachse jedes Gehäuseschachts bestimmen die Einschubrichtung für den jeweiligen Akkupack. Die Gehäuseschächte sind derart angeordnet, dass die Einschubrichtung im Wesentlichen in Hochrichtung der Rückenplatte verläuft.

Es kann vorteilhaft sein, die Gehäuseschächte selbst als mechanisches Bauteil zur Halterung der Gebläsespirale an der Rückenplatte auszubilden. In einer ersten Ausführungsform können die Gehäuseschächte unmittelbar an der Rückenplatte festgelegt sein und/oder an der Gebläsespirale festgelegt werden.

In besonderer Ausgestaltung ist vorgesehen, die Gehäuseschächte über ein Antivibrationselement an der Rückenplatte festzulegen. In Weiterbildung der Erfindung können die Gehäuseschächte auch über ein Antivibrationselement an der Gebläsespirale festgelegt werden. Dadurch werden die Gehäuseschächte ein verbindendes konstruktives Bauteil zwischen der Rückenplatte und der Gebläsespirale. Der gebildete konstruktive Bauteil ist über die Antivibrationselemente vibrationsentkoppelt.

In Ergänzung zu der Befestigung der Gebläsespirale an der Rückenplatte über die Gehäuseschächte kann vorgesehen sein, die Gebläsespirale über ein Antivibrationselement unmittelbar an der Rückenplatte festzulegen. Alle das Blasgerät und/oder die Gehäuseschächte abstützenden Antivibrationselemente können vorteilhaft horizontal angeordnet werden. Die Antivibrationselemente können lotrecht und/oder etwa lotrecht zur Ebene der Rückenplatte angeordnet sein. In Weiterbildung der Anbindung der Gebläsespirale an die Rückenplatte kann es vorteilhaft sein, wenn sich der Fuß der Gebläsespirale alternativ oder zusätzlich auf einer Standplatte abstützt, die zusammen mit der Rückenplatte eine L-förmige Trage für das Blasgerät bilden.

Weitere Merkmale der Erfindung ergeben sich aus den weiteren Ansprüchen, der Beschreibung und der Zeichnung, in der ein Ausführungsbeispiel der Erfindung dargestellt ist, welches nachfolgend beschrieben wird. Die in den Ansprüchen, der Beschreibung und der Zeichnung angegebenen Merkmale sind untereinander beliebig kombinierbar. In der Zeichnung zeigt:
- Fig. 1: ein elektrisches Blasgerät mit einer erfindungsgemäßen Akkuanordnung in einer perspektivischen Ansicht von hinten,
- Fig. 2: einen Schnitt durch das Blasgerät nach Fig. 1 in einer perspektivischen Darstellung,
- Fig. 3: einen weiteren Schnitt durch das Blasgerät nach Fig. 1,
- Fig. 4: eine Seitenansicht auf das elektrische Blasgerät nach Fig. 1,
- Fig. 5: eine Ansicht auf das elektrische Blasgerät nach Fig. 1 von hinten,
- Fig. 6: eine Ansicht auf das Blasgerät nach Fig. 1 von oben,
- Fig. 7: eine schematische Darstellung eines Blasgerätes nach Fig. 1 mit schematisch dargestellten Antivibrationselementen als Befestigungselemente.

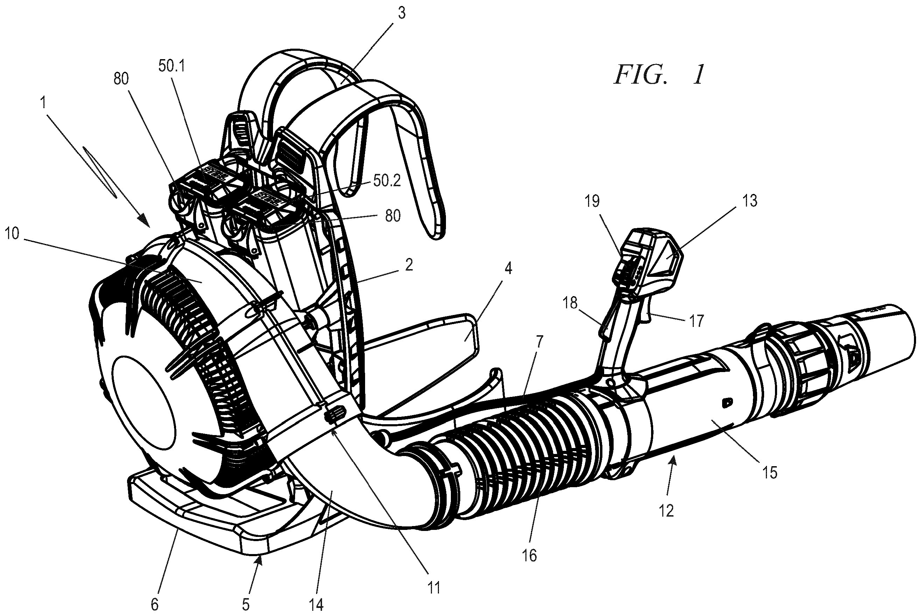

Das in Fig. 1 dargestellte Ausführungsbeispiel eines elektrischen Blasgerätes 1 ist ein rückengetragenes Blasgerät. Auch andere Ausgestaltungen des Blasgerätes wie ein handgetragenes Blasgerät, ein fahrbares Blasgerät oder dergleichen können mit dem Gegenstand der Erfindung ausgerüstet werden.

Das rückengetragene Blasgerät 1 umfasst eine Rückenplatte 2, die mittels schematisch dargestellten Schultergurten 3 und einem schematisch dargestellten Beckengurt 4 auf dem Rücken eines Benutzers festgelegt wird. Die Rückenplatte 2 ist Teil einer Trage 5, die mit einer Standplatte 6 versehen ist. Die Rückenplatte 2 und die Standplatte 6 bilden die in Seitenansicht L-förmige ausgebildete Trage 5.

An der Rückenplatte 2 ist eine Gebläsespirale 10 gehalten, die einen Auslass 11 zum Anschluss eines Blasrohrs 12 aufweist. Auf dem Blasrohr 12 ist ein Handgriff 13 zum Halten und Führen des Blasrohrs 12 festgelegt. Das Blasrohr 12 weist einen hinteren starren Rohrabschnitt 14 zum Anschluss an den Auslass 11 der Gebläsespirale 10 auf. Der Rohrabschnitt 14 ist zweckmäßig in dem Auslass 11 drehbar gehalten. An den hinteren Rohrabschnitt 14 ist ein flexibler Rohrabschnitt 16 angeschlossen, der mit einem vorderen starren Rohrabschnitt 15 verbunden ist. Der Handgriff 13 ist auf dem vorderen Rohrabschnitt 15 festgelegt. Der vordere Rohrabschnitt 15 ist relativ zum hinteren Rohrabschnitt 14 in alle Raumrichtungen verschwenkbar.

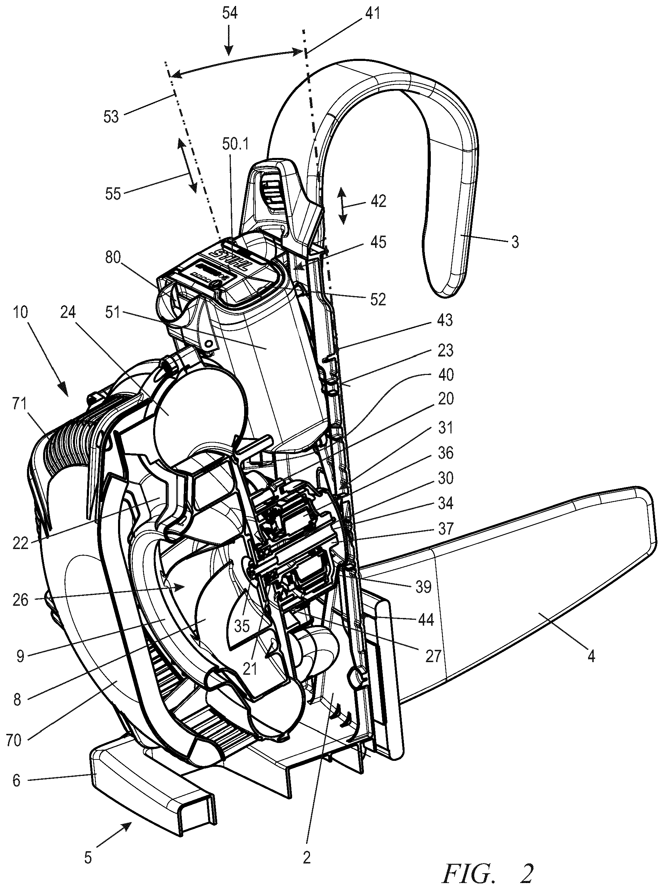

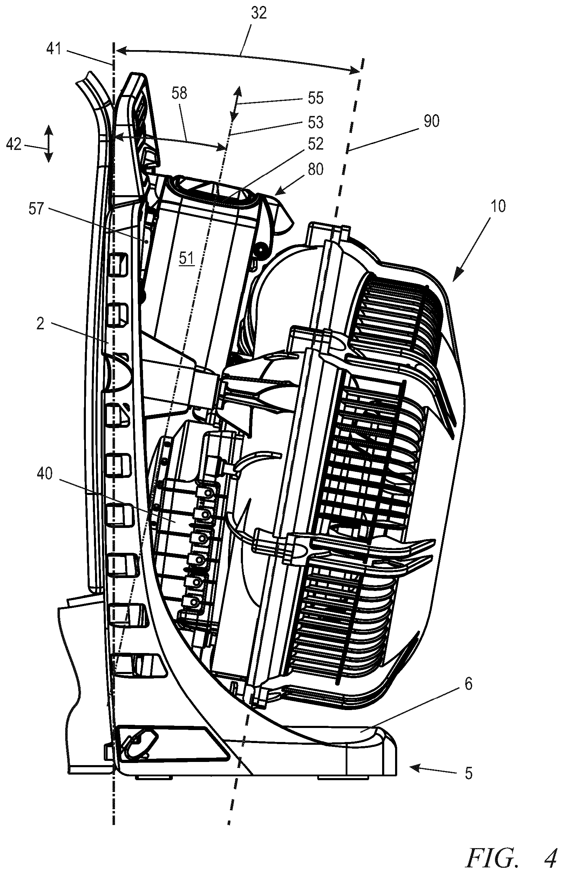

Im Handgriff 13 sind Bedienelemente vorgesehen, so zum Beispiel ein Gashebel 17, eine Gashebelsperre 18 oder weitere geeignete Bedienelemente 19. Die Bedienelemente 19 sind über eine Verbindungsleitung 7 mit einer Steuerungselektronik 40 zur Bedienung eines Elektromotors 30 (Fig. 2, 4) verbunden. Die zum Betrieb des Elektromotors 30 notwendige Energie wird durch zwei Akkupacks 50.1, 50.2 bereitgestellt. Die Akkupacks 50.1, 50.2 sind in einem Aufnahmeraum 45 zwischen der Gebläsespirale 10 und der Rückenplatte 2 gehalten. Im gezeigten Ausführungsbeispiel sind in dem Aufnahmeraum 45 zwei Akkupacks 50.1 und 50.2 vorgesehen, die nebeneinander angeordnet sind.

Wie Fig. 2 zeigt, weist die Gebläsespirale 10 einen Spiralkanal 24 auf, der in den Auslass 11 mündet. Im Zentrum 26 des Spiralkanals 24 dreht das Gebläserad 8, wobei das Zentrum 26 von einer ersten axialen Stirnwand 20 und einer zweiten axialen Stirnwand 22 begrenzt ist. Zwischen den axialen Stirnwänden 20, 22 ist das Gebläserad 8 angeordnet. Die erste axiale Stirnwand 20 liegt der Rückenplatte 2 mit Abstand gegenüber, wodurch ein Bauraum 31 gebildet ist, der insbesondere der Aufnahme eines Antriebs wie einem Elektromotor 30 dient.

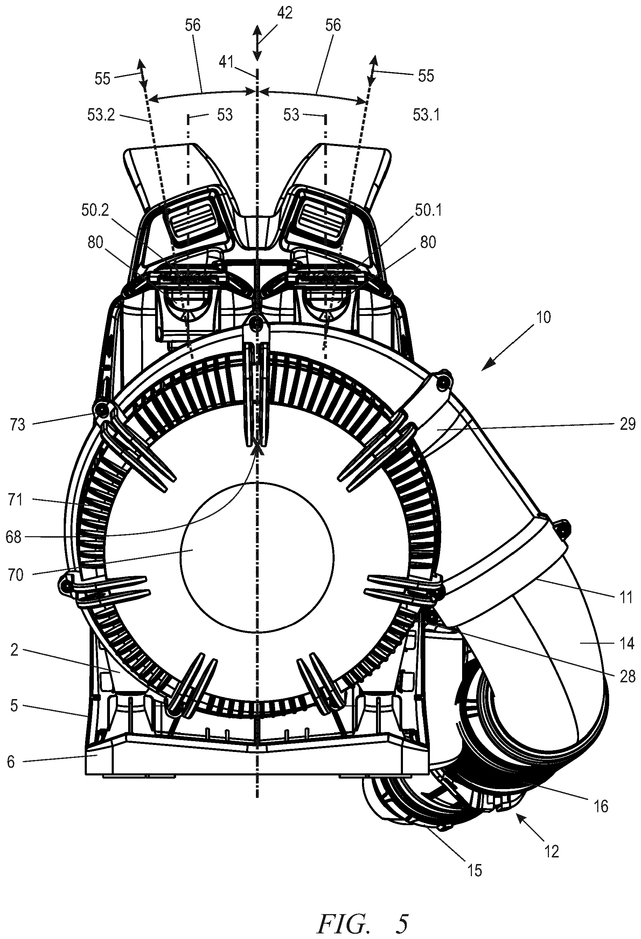

Die zweite axiale Stirnwand 22 liegt auf der der Rückenplatte 2 abgewandten Seite der Gebläsespirale 10. In der zweiten axialen Stirnwand 22 ist eine Ansaugöffnung 9 ausgebildet, über die axial Umgebungsluft in das Gebläserad 8 angesaugt und radial in den Spiralkanal 24 gefördert wird. Der Spiralkanal 24 erweitert sich von einem ersten Ende 28 zu seinem zweiten Ende 29 (Fig. 5). Das zweite Ende 29 bildet den Auslass 11 des Spiralkanals 24.

Vor der Ansaugöffnung 9 ist eine Abdeckung 70 vorgesehen, die die Form eines Tellers, einer Scheibe oder dgl. aufweist. Die Abdeckung 70 begrenzt mit der Gebläsespirale 10 einen ringförmigen Ansaugspalt, der von einem Schutzgitter 71 abgedeckt ist. Die Abdeckung 70 bildet zusammen mit dem Schutzgitter 71 eine bauliche Einheit, die über Befestigungen 73 an der Gebläsespirale 10 gehalten ist. Zweckmäßig ist auf der Innenseite der Abdeckung eine Dämmmatte 75 gehalten. Die Dämmmatte 75 trägt zusammen mit der Abdeckung 70 zur signifikanten Senkung des Betriebsgeräusches bei.

Im gezeigten Ausführungsbeispiel ist das Gebläserad 8 von dem Elektromotor 30 angetrieben, der in dem Bauraum 31 vorteilhaft an der ersten axialen Stirnwand 20 der Gebläsespirale 10 gehalten ist. Die Antriebswelle 34 des Elektromotors 30 ragt durch eine Wellenöffnung 21 in der ersten axialen Stirnwand 20 der Gebläsespirale 10 in das Zentrum 26 der Gebläsespirale 10 ein. Der einragende Endabschnitt 35 der Antriebswelle 34 ist drehfest mit dem Gebläserad 8 verbunden.

Der Elektromotor 30 ist vorteilhaft ein sogenannter Außenläufer, d. h., der Stator 36 liegt innerhalb des Rotors 37. Die mit dem Rotor 37 verbundene Antriebswelle 34 durchragt den Stator 36. Die Antriebswelle 34 ist in einer zentralen Hülse eines Tragflansches des Elektromotors 30 gelagert und vorzugsweise axial gesichert gehalten. Auch andere Bauformen des Elektromotors sind im Rahmen der Erfindung einsetzbar.

Der Elektromotor 30 kann in einem Motorgehäuse 39 aufgenommen sein, welches auf einer ringförmigen Gehäusehalterung 27 der axialen Stirnwand 20 festgelegt, insbesondere aufgesteckt ist. Die Steckverbindung zwischen dem Motorgehäuse 39 und der Gehäusehalterung 27 kann eine formschlüssige Gehäusesicherung umfassen. Das Motorgehäuse 39 selbst ist vorteilhaft stirnseitig offen und wird insbesondere von der axialen Stirnwand 20 der Gebläsespirale 10 verschlossen.

Die Rückenplatte 2 zum Tragen des Blasgerätes 1 auf dem Rücken eines Benutzers weist eine in Hochrichtung 42 der Rückenplatte 2 verlaufende Plattenachse 41 auf. Die Plattenachse 41 ist insbesondere eine Mittelachse der Rückenplatte 2. Die Rückenplatte 2 selbst weist einen ersten, oberen Plattenabschnitt 43 und zumindest einen zweiten, unteren Plattenabschnitt 44 auf. Im gezeigten Ausführungsbeispiel sind an dem ersten, oberen Plattenabschnitt 43 die Schultergurte 3 festgelegt. An dem zweiten, unteren Plattenabschnitt 44 ist der Beckengurt 4 festgelegt. In Hochrichtung 42 der Rückenplatte 2 können weitere Plattenabschnitte vorgesehen sein, die zweckmäßig zwischen dem oberen Plattenabschnitt 43 und dem unteren Plattenabschnitt 44 liegen. Der erste, obere Plattenabschnitt 43 und der zweite, untere Plattenabschnitt 44 liegen in Hochrichtung 42 der Plattenachse 41 hintereinander. Im Ausführungsbeispiel schließen die Plattenabschnitte 43 und 44 unmittelbar aneinander an

Nach der Erfindung ist die Anordnung der Gebläsespirale 10 an der Rückenplatte 2 derart getroffen, dass zwischen dem ersten, oberen Plattenabschnitt 43 und der Gebläsespirale 10 der Aufnahmeraum 45 ausgebildet ist. Der Aufnahmeraum 45 ist derart bemessen, dass in dem Aufnahmeraum 45 zwei Akkupacks 50.1, 50.2 aufgenommen werden können. Nach der Erfindung ist vorgesehen, in dem Aufnahmeraum 45 zwei Gehäuseschächte 51 für die beiden Akkupacks 50.1 und 50.2 anzuordnen Jedem der beiden Akkupacks 50.1 und 50.2 ist ein Gehäuseschacht 51 zugeordnet. Jeder angeordnete Akkupack 50.1 und 50.2 ist in einem eigenen Gehäuseschacht 51 gehalten.

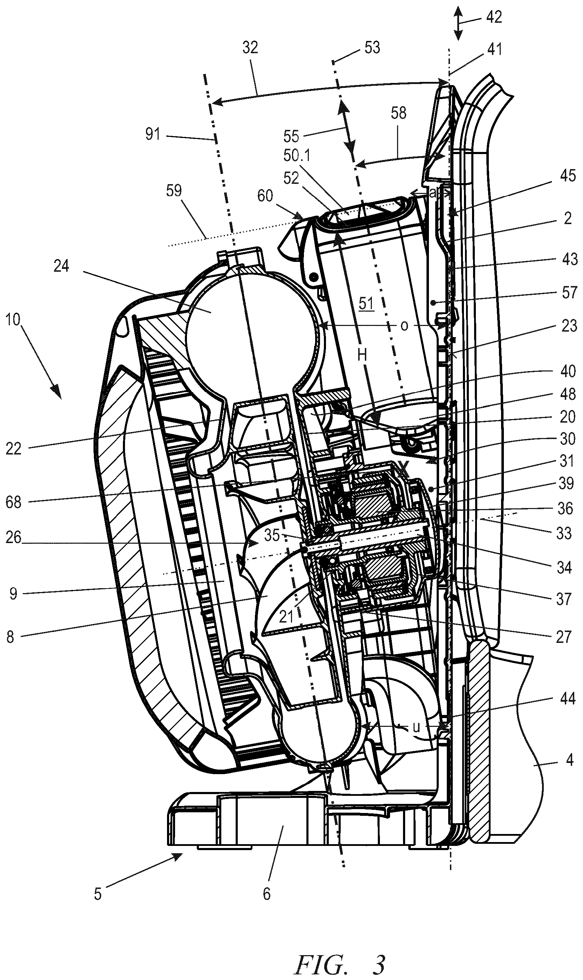

Die Anordnung der Akkupacks 50.1 und 50.2 in dem Aufnahmeraum 45 zwischen dem ersten, oberen Plattenabschnitt 43 und der Gebläsespirale 10 führt zu einem hohen Schwerpunkt 68, der den Tragekomfort des Blasgerätes 1 signifikant erhöht. Der Schwerpunkt 68 liegt in Hochrichtung42 der Plattenachse 41 vorteilhaft zwischen dem Elektromotor 30 und den Akkupacks 50.1 und 50.2. Der Schwerpunkt 68 ist beispielhaft in den Fig. 3, 5 und 7 gezeigt.

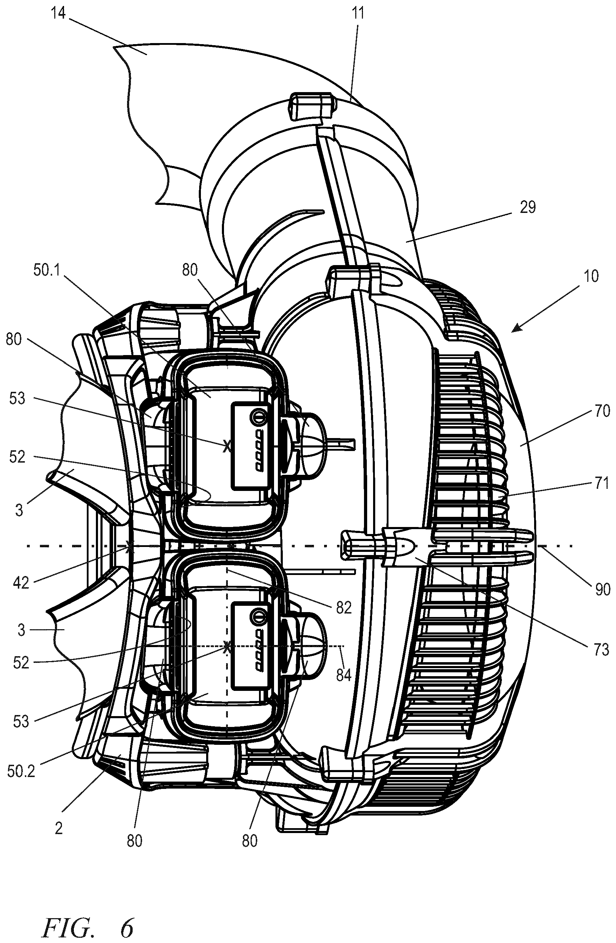

Jeder Gehäuseschacht 51 weist eine Einschuböffnung 52 für einen Akkupack 50.1 bzw. 50.2 auf. Die Einschuböffnung 52 ist der Querschnittsform des Akkupacks 50.1, 50.2 angepasst ausgebildet. Im gezeigten Ausführungsbeispiel hat die Einschuböffnung 52 eine rechteckige Grundform, wie in der Draufsicht nach Fig.6 dargestellt. Die Anordnung ist so getroffen, dass sich eine über die Breite der Einschuböffnung 52 erstreckende große Hauptachse 82 der Einschuböffnung 52 parallel oder im Wesentlichen parallel zur Ebene 23 der Rückenplatte 2 liegt. Die sich quer zur Breite der Einschuböffnung 52 erstreckende Querachse 84 der Einschuböffnung 52 liegt lotrecht oder im Wesentlichen lotrecht zur Ebene 23 der Rückenplatte 2. Die Höhe H des Gehäuseschachtes 51 ist größer als die Breite der Einschuböffnung 52, insbesondere mehrfach größer als die Breite der Einschuböffnung 52.

Auf den Breitseiten der Einschuböffnung 52 sind am Gehäuseschacht 51 Griffmulden 80 ausgebildet, über die ein Benutzer einen eingeschobenen Akkupack 50.1, 50.2 greifen kann. Der Akkupack 50.1, 50.2 kann so über seine gesamte Höhe vollständig oder weitgehend vollständig in dem Gehäuseschacht 51 aufgenommen sein. Zweckmäßig liegt in einer Griffmulde 80 ein Betätigungsglied für eine Verriegelung des Akkupacks im Gehäuseschacht 51.

Die Einschuböffnung 52 liegt dem Elektromotor 30 abgewandt. Die Einschuböffnung 52 liegt von der Ansaugöffnung 9 der Gebläsespirale 10 entfernt und damit außerhalb des Schmutzbereiches. Die Einschuböffnung 52 ist insbesondere von oben leicht zugänglich. Der Gehäuseschacht 51 weist eine durch die Einschuböffnung verlaufende Hochachse 53 auf. Ein Akkupack 50.1 oder 50.2 wird in Einschubrichtung 55 durch die Einschuböffnung 52 in den Gehäuseschacht 51 eingeschoben. Um das Einschieben des Akkupacks 50.1 oder 50.2 in Einschubrichtung 55 in den Gehäuseschacht 51 zu erleichtern, kann es vorteilhaft sein, den Gehäuseschacht 51 geneigt zur Rückenplatte 2 anzuordnen. Im gezeigten Ausführungsbeispiel nach Figur 2 liegt die Hochachse 53 jedes Gehäuseschachtes 51 unter einem globalen oder allgemeinen Neigungswinkel 54 zur Rückenplatte 2 geneigt.

Der globale Neigungswinkel 54 kann ein Neigungswinkel im Raum sein. Nach der Erfindung ist vorgesehen, dass der globale Neigungswinkel unterschiedlich ausgebildet sein kann. In einer ersten Darstellung in Ansicht auf die Rückenplatte 2 kann gemäß Fig. 5 kann die Hochachse 53 zur Plattenachse 41 parallel verlaufen. Es kann zweckmäßig sein, die Hochachse 53 in Draufsicht auf die Rückenplatte 2 derart anzuordnen, dass die strichliert dargestellte Hochachse 53.1 mit einem ersten Neigungswinkel 56 zur Plattenachse 41 seitlich geneigt liegt. Im Aufnahmeraum 45 sind zwei Akkupacks 50.1 und 50.2 angeordnet. Die Ausbildung ist so getroffen, dass die eine Hochachse 53.1 des einen Gehäuseschachtes 51 zur Plattenachse 41 um einen ersten Neigungswinkel 56 nach rechts geneigt ist und die andere Hochachse 53.1 des anderen Gehäuseschachtes 51 zur Plattenachse 41 um einen ersten Neigungswinkel 56 nach links geneigt ist. Dadurch ergibt sich jeweils eine leicht seitlich verlaufende Einschubrichtung 55 für einen Akkupack 50.1 bzw. 50.2.

Wie im Ausführungsbeispiel dargestellt, sind für den Betrieb des elektrischen Blasgerätes 1 zwei Akkupacks 50.1 und 50.2 vorgesehen, die jeweils auf einer Hochseite der Plattenachse 41 angeordnet sind. In der Ansicht von hinten nach Fig. 5 liegt ein Akkupack 50.1 auf der einen Seite der mittig verlaufenden Plattenachse 41 und der Akkupack 50.2 auf der anderen Seite der mittig verlaufenden Plattenachse 41. Wie sich ferner aus der Draufsicht nach Fig. 6 ergibt, ist die Anordnung der Akkupacks 50.1 und 50.2 vorteilhaft so getroffen, dass die Akkupacks 50.1 und 50.2 zur Plattenachse 41 symmetrisch liegen. Der gemeinsame Schwerpunkt der beiden Akkupacks 50.1 und 50.2 liegt so auf einer Mittelebene 90 des Blasgerätes 1. Die Plattenachse 41 liegt auf der Mittelebene 90 des Blasgerätes 1.

Wie in Fig. 3 dargestellt, kann die Anordnung des Gehäuseschachtes 51 jeweils auch derart vorgesehen sein, dass die Hochachse 53 in Seitenansicht nach Fig. 3 mit einem zweiten Neigungswinkel 58 geneigt liegt. Anders ausgedrückt bildet die Rückenplatte 2 eine Ebene 23, wobei die Hochachse 53 des Gehäuseschachtes 51 zur Ebene 23 der Rückenplatte 2 mit einem zweiten Neigungswinkel 56 geneigt liegt, insbesondere nach hinten geneigt liegt. Durch den Neigungswinkel 56 wird erreicht, dass die Einschuböffnung 52 mit einem größeren Abstand a zur Rückenplatte 2 liegt als der Boden des Gehäuseschachtes 51. Durch den größeren Abstand a ist eine gute Zugänglichkeit der Einschuböffnung 52 zum Einsetzen eines Akkupacks in Einschubrichtung 55 gegeben.

Der Gehäuseschacht 51 kann jeweils derart angeordnet sein, dass die Hochachse 53 des Gehäuseschachtes 51 einerseits mit einem ersten seitlichen Neigungswinkel 56 zur Plattenachse 41 liegt oder andererseits mit einem zweiten Neigungswinkel 58 zur Ebene 23 der Rückenplatte 2 liegt. In bevorzugter Ausgestaltung ist die Anordnung so getroffen, dass sich der allgemeine oder globale Neigungswinkel 54 der Hochachse 53 aus einem seitlichen ersten Neigungswinkel 56 und einem zur Ebene 23 der Rückenplatte 2 ausgebildeten zweiten Neigungswinkel 58 zusammensetzt.

Die Größe des globalen, des ersten und/oder des zweiten Neigungswinkels 54, 56 oder 58 liegt vorteilhaft in einem Bereich zwischen 2° bis 15°. In besonderer Ausgestaltung der Erfindung ist der Neigungswinkel 54, 56 oder 58 mit 5° bis 10° ausgebildet. Eine Gestaltung mit einem Neigungswinkel 54, 56 und/oder 58 von 10° ist zweckmäßig.

In Weiterbildung der Erfindung ist vorgesehen, dass die Gebläsespirale 10 zur Rückenplatte 2 bzw. zur Ebene 23 der Rückenplatte 2 unter einem Gehäusewinkel 32 geneigt liegt. Wie der Schnittdarstellung nach Fig. 3 zu entnehmen, hat die Antriebswelle 34 des Elektromotors 30 eine Drehachse 33, die bei Neigung der Gebläsespirale 10 zur Ebene 23 der Rückenplatte 2 geneigt liegt. Der Gehäusewinkel 32 ist zwischen einer mittigen Trennebene 91 der Gebläsespirale 10 und der Ebene 23 der Rückenplatte 2 oder - wie in der Darstellung in Fig. 3 gezeigt - der Plattenachse 41 ausgebildet.

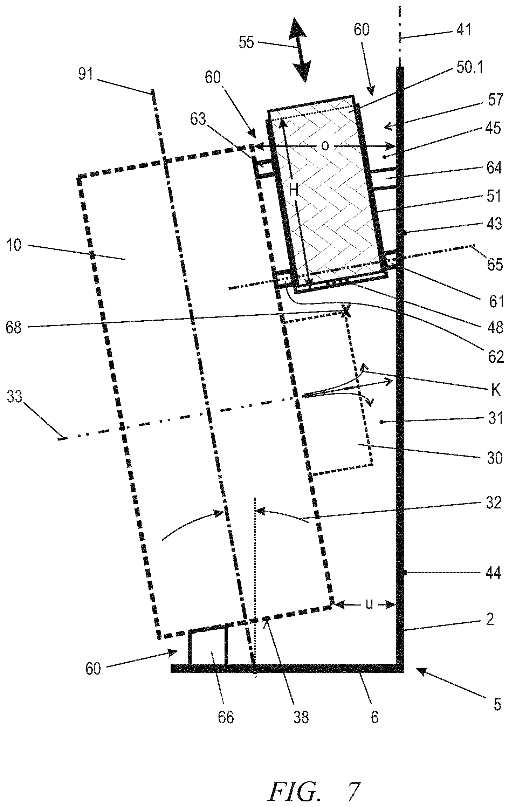

Durch die Neigung der Gebläsespirale 10 um den Gehäusewinkel 32 ergibt sich, - wie auch Fig. 3 und 7 zeigt - dass die Gebläsespirale 10 zu dem ersten, oberen Plattenabschnitt 43 einen ersten Abstand o aufweist. Zu dem zweiten, unteren Plattenabschnitt 44 hat die Gebläsespirale 10 einen Abstand u. Durch den Gehäusewinkel 32 ist die Anordnung so getroffen, dass der obere Abstand o zum oberen Plattenabschnitt 43 größer ist als der untere Abstand u zum unteren Plattenabschnitt 44. Durch die Neigung der Gebläsespirale 10 zur Ebene der Rückenplatte 2 ergibt sich zwischen der Gebläsespirale 10 und dem oberen Plattenabschnitt 43 ein größerer Raumbereich 57 für die beiden Akkupacks 50.1, 50.2.

Jeder Gehäuseschacht 51 zur Aufnahme eines Akkupacks 50.1, 50.2 ist in dem durch die Neigung der Gebläsespirale gebildeten Raumbereich 57 angeordnet. Aufgrund der Neigung der Gebläsespirale 10 und dem dadurch erhaltenen größeren Raumbereich 57 können die Gehäuseschächte 51 soweit zwischen der Gebläsespirale 10 und der Rückenplatte 2 eintauchen, dass die Einschuböffnung 52 auf etwa einer Ebene 59 mit der Oberkante der Gebläsespirale 10 liegt.

Wie darüber hinaus in den Schnittdarstellungen der Fig. 2 und 3 gezeigt ist, liegt der Boden 48 der Gehäuseschächte 51 benachbart zum Elektromotor 30. Der Boden 48 der Gehäuseschächte 51 bildet eine Begrenzung für den Bauraum 31, in dem der Elektromotor 30 angeordnet ist. Der Elektromotor 30 wird von einem Kühlluftstrom K aus der Gebläsespirale 10 gekühlt. Der Kühlluftstrom K tritt axial in das Motorgehäuse 39 ein und wird im Bereich der Rückenplatte 2 in den Bauraum 31 ausgeblasen. Die Gehäuseschächte 51 begrenzen den Bauraum 31 und stehen mit dem ausgeblasenen Kühlluftstrom K des Elektromotors 30 in Kontakt. Das kann zum Temperieren eines in dem jeweiligen Gehäuseschacht 51 aufgenommenen Akkupacks 50.1, 50.2 genutzt werden. Mittels des aus dem Motorgehäuse 39 austretenden Kühlluftstroms K können die Akkupacks 50.1, 50.2 gekühlt oder auch gewärmt werden.

Die Gehäuseschächte 51 können mechanisch an der Rückenplatte 2 fixiert sein. Alternativ können die Gehäuseschächte 51 auch mechanisch an der Gebläsespirale 10 fixiert sein. In besonderer Ausgestaltung der Erfindung sind die Gehäuseschächte 51 einerseits mit der Rückenplatte 2 und andererseits mit der Gebläsespirale 10 über Befestigungselemente 60 mechanisch verbunden, sodass die Gehäuseschächte 51 selbst als konstruktives Befestigungsbauteil zwischen der Rückenplatte 2 und der Gebläsespirale 10 wirken.

In besonderer Ausgestaltung kann die mechanische Verbindung zwischen den Gehäuseschächten 51 und der Rückenplatte 2 und/oder die mechanische Verbindung zwischen den Gehäuseschächten 51 und der Gebläsespirale10 über Befestigungselemente 60 hergestellt werden. In besonderer Ausgestaltung kann ein Befestigungselement als Antivibrationselement ausgebildet sein. Wie die schematische Darstellung nach Fig. 7 zeigt, können Antivibrationselementen 61 und 62 vorgesehen sein, die auf der einen Seite zwischen den Gehäuseschächten 51 und der Rückenplatte 2 angeordnet und auf der anderen Seite zwischen der Gebläsespirale 10 und den Gehäuseschächten 51 angeordnet sind. In vorteilhafter Ausbildung liegen die Antivibrationselementen 61 und 62 auf einer gemeinsamen Achse 65.

In einer anderen zweckmäßigen Ausgestaltung können die Antivibrationselementen 63 und 64, die auf einer Seite zwischen der Gebläsespirale 10 und den Gehäuseschächten 51 und auf der anderen Seite zwischen den Gehäuseschächten 51 und der Rückenplatte 2 vorgesehen sind, in unterschiedlichen Höhen angeordnet sein.

Zur Abstützung der Gesamtlast des Blasgerätes 1 an der L-förmigen Trage 5 kann zweckmäßig zwischen dem Fuß 38 der Gebläsespirale 10 und der Standplatte 6 der Trage 5 ein Stützelement vorgesehen sein. Das Stützelement ist vorteilhaft ein Antivibrationselement 66.

## Patentansprüche

1. Elektrisches Blasgerät, mit einer Rückenplatte (2) zum Tragen auf dem Rücken eines Benutzers,
- wobei die Rückenplatte (2) eine in Hochrichtung (42) der Rückenplatte (2) verlaufende Plattenachse (41) aufweist,
- und die Rückenplatte (2) in Hochrichtung (42) der Plattenachse (41) zumindest einen ersten, oberen Plattenabschnitt (43) und zumindest einen zweiten, unteren Plattenabschnitt (44) aufweist, die in Hochrichtung (42) der Plattenachse (41) hintereinander liegen,
- und mit einer Gebläsespirale (10), die einen Blasluftauslass (11) aufweist,
- wobei die Gebläsespirale (10) eine der Rückenplatte (2) zugewandt liegende erste axiale Stirnseite (20) aufweist,
- und mit einem auf der ersten axialen Stirnseite (20) der Gebläsespirale (10) angeordneten Elektromotor (30) mit einer Antriebswelle (34), die mit einem in der Gebläsespirale (10) drehenden Gebläserad (8) verbunden ist,
- und mit zumindest einem Akkupack (50.1, 50.2) zum Betrieb des Elektromotors (30),
**dadurch gekennzeichnet**
- **dass** für den Betrieb des elektrischen Blasgeräts zwei Akkupacks (50.1, 50.2) vorgesehen sind, die jeweils auf einer Hochseite der Plattenachse (41) angeordnet sind,
- wobei jeder angeordnete Akkupack (50.1, 50.2) in einem eigenen Gehäuseschacht (51) gehalten ist,
- wobei zwischen dem ersten, oberen Plattenabschnitt (43) der Rückenplatte (2) und der Gebläsespirale (10) ein Aufnahmeraum (45) für die Akkupacks (50.1, 50.2) ausgebildet ist,
- und in dem Aufnahmeraum (45) die Gehäuseschächte (51) für den Akkupack (50.1, 50.2) gehalten sind,
- wobei die beiden Akkupacks (50.1, 50.2) nebeneinander angeordnet sind,
- wobei in der Ansicht von hinten ein Akkupack (50.1) auf der einen Seite der mittig verlaufenden Plattenachse (41) liegt,
- und ein Akkupack (50.2) auf der anderen Seite der mittig verlaufenden Plattenachse (41) liegt, wobei jeder Gehäuseschacht (51) eine Einschuböffnung (52) aufweist, die dem Elektromotor (30) abgewandt liegt.

2. Blasgerät nach Anspruch 1,
**dadurch gekennzeichnet, dass** jeder Gehäuseschacht (51) eine durch die Einschuböffnung (52) verlaufende Hochachse (53) aufweist, und die Hochachse (53) mit einem räumlichen Neigungswinkel (54) zur Plattenachse (2) liegt.

3. Blasgerät nach Anspruch 2,
**dadurch gekennzeichnet, dass** in Draufsicht auf die Rückenplatte (2) die Hochachse (53) jedes Gehäuseschachtes (51) mit einem ersten Neigungswinkel (56) seitlich zur Plattenachse (41) geneigt liegt.

4. Blasgerät nach Anspruch 2 oder 3,
**dadurch gekennzeichnet, dass** die Rückenplatte (2) eine Ebene (23) aufspannt und die Hochachse (53) jedes Gehäuseschachtes (51) zur Ebene der Rückenplatte (2) mit einem zweiten Neigungswinkel (58) geneigt liegt.

5. Blasgerät nach einem der Ansprüche 2 bis 4,
**dadurch gekennzeichnet, dass** der erste und/oder der zweite Neigungswinkel (56, 58) in einem Bereich zwischen 2° bis 15° liegt.

6. Blasgerät nach einem der Ansprüche 2 bis 5,
**dadurch gekennzeichnet, dass** der erste und/oder der zweite Neigungswinkel (56, 58) in einem Bereich zwischen 5° bis 10° liegt, insbesondere der Neigungswinkel (56, 58) 10° ist.

7. Blasgerät nach einem der Ansprüche 1 bis 6,
**dadurch gekennzeichnet, dass** die Gebläsespirale (10) zur Rückenplatte (2) unter einem Gehäusewinkel (32) geneigt liegt, derart, dass die Gebläsespirale (10) zu dem ersten, oberen Plattenabschnitt (43) der Rückenplatte (2) einen größeren Abstand (o) aufweist als der Abstand (u), den die Gebläsespirale (10) zu dem zweiten, unteren Plattenabschnitt (44) der Rückenplatte (2) aufweist.

8. Blasgerät nach Anspruch 7,
**dadurch gekennzeichnet, dass** die Gehäuseschächte (51) in dem Raumbereich (57) mit dem größeren Abstand (o) der Gebläsespirale (10) zur Rückenplatte (2) angeordnet sind.

9. Blasgerät nach einem der Ansprüche 1 bis 8,
**dadurch gekennzeichnet, dass** die Einschuböffnung (52) und die Gehäuseschächte (51) eine Einschubrichtung (55) für den Akkupack (50.1, 50.2) bestimmen, wobei die Einschubrichtung (55) in Hochrichtung (42) der Rückenplatte (2) verläuft.

10. Blasgerät nach einem der Ansprüche 1 bis 9,
**dadurch gekennzeichnet, dass** die Gehäuseschächte (51) an der Rückenplatte (2) festgelegt sind.

11. Blasgerät nach einem der Ansprüche 1 bis 10,
**dadurch gekennzeichnet, dass** die Gehäuseschächte (51) über ein Antivibrationselement (60) an der Rückenplatte (2) festgelegt sind.

12. Blasgerät nach einem der Ansprüche 1 bis 11,
**dadurch gekennzeichnet, dass** die Gehäuseschächte (51) an der Gebläsespirale (10) festgelegt sind.

13. Blasgerät nach einem der Ansprüche 1 bis 12,
**dadurch gekennzeichnet, dass** die Gehäuseschächte (51) über ein Antivibrationselement (60) an der Gebläsespirale (10) festgelegt sind.

14. Blasgerät nach einem der Ansprüche 1 bis 13,
**dadurch gekennzeichnet, dass** die Gebläsespirale (10) über ein Antivibrationselement (60) an der Rückenplatte (2) festgelegt ist.

## Claims

1. Electric blower device, with a back plate (2) for carrying on the back of a user,
- wherein the back plate (2) has a plate axis (41) extending in the vertical direction (42) of the back plate (2)
- and the back plate (2) has at least one first, upper plate section (43) and at least one second, lower plate section (44) in the vertical direction (42) of the plate axis (41), which lie one behind the other in the vertical direction (42) of the plate axis (41),
- and with a blower spiral (10) which has a blower air outlet (11),
- wherein the blower spiral (10) has a first axial end face (20) facing the back plate (2),
- and with an electric motor (30) arranged on the first axial end face (20) of the blower spiral (10) with a drive shaft (34) which is connected to a blower wheel (8) rotating in the blower spiral (10),
- and with at least one battery pack (50.1, 50.2) for operating the electric motor (30),
**characterized in that**
- two battery packs (50.1, 50.2) are provided for operating the electric blower device, each of which is arranged on a vertical side of the plate axis (41),
- wherein each arranged battery pack (50.1, 50.2) is held in its own housing slot (51),
- wherein a receiving space (45) for the battery packs (50.1, 50.2) is formed between the first, upper plate section (43) of the back plate (2) and the blower spiral (10),
- and the housing slots (51) for the battery pack (50.1, 50.2) are held in the receiving space (45),
- wherein the two battery packs (50.1, 50.2) are arranged side by side,
- wherein, in the rear view, one battery pack (50.1) lies on one side of the centrally extending plate axis (41),
- and one battery pack (50.2) lies on the other side of the centrally extending plate axis (41), wherein each housing slot (51) has an insertion opening (52) which faces away from the electric motor (30).

2. Blower device according to claim 1,
**characterized in that** each housing slot (51) has a vertical axis (53) extending through the insertion opening (52), and the vertical axis (53) lies at a spatial inclination angle (54) to the plate axis (2).

3. Blower device according to claim 2,
**characterized in that**, in a top view of the back plate (2), the vertical axis (53) of each housing slot (51) is inclined laterally to the plate axis (41) at a first inclination angle (56).

4. Blower device according to claim 2 or 3,
**characterized in that** the back slot (2) spans a plane (23) and the vertical axis (53) of each housing slot (51) is inclined to the plane of the back plate (2) at a second inclination angle (58).

5. Blower device according to one of claims 2 to 4,
**characterized in that** the first and/or the second inclination angle (56, 58) lies in a range between 2° and 15°.

6. Blower device according to one of claims 2 to 5,
**characterized in that** the first and/or the second inclination angle (56, 58) lies in a range between 5° and 10°, in particular the inclination angle (56, 58) is 10°.

7. Blower device according to one of claims 1 to 6,
**characterized in that** the blower spiral (10) is inclined to the back plate (2) at a housing angle (32) such that the blower spiral (10) has a greater distance (o) from the first, upper plate section (43) of the back plate (2) than the distance (u) that the blower spiral (10) has from the second, lower plate section (44) of the back plate (2).

8. Blower device according to claim 7,
**characterized in that** the housing slots (51) are arranged in the spatial area (57) with the greater distance (o) of the blower spiral (10) from the back plate (2).

9. Blower device according to one of claims 1 to 8,
**characterized in that** the insertion opening (52) and the housing slots (51) determine an insertion direction (55) for the battery pack (50.1, 50.2), wherein the insertion direction (55) extends in the vertical direction (42) of the back plate (2).

10. Blower device according to one of claims 1 to 9,
**characterized in that** the housing slots (51) are fixed to the back plate (2).

11. Blower device according to one of claims 1 to 10,
**characterized in that** the housing slots (51) are fixed to the back plate (2) via an anti-vibration element (60).

12. Blower device according to one of claims 1 to 11,
**characterized in that** the housing slots (51) are fixed to the blower spiral (10).

13. Blower device according to one of claims 1 to 11,
**characterized in that** the housing slots (51) are fixed to the blower spiral (10) via an anti-vibration element (60).

14. Blower device according to one of claims 1 to 13,
**characterized in that** the blower spiral (10) is fixed to the back plate (2) via an anti-vibration element (60).

## Revendications

1. Appareil de soufflage électrique, avec une plaque dorsale (2) destinée à être portée sur le dos d'un utilisateur,
- dans lequel la plaque dorsale (2) présente un axe de plaque (41) s'étendant dans la direction verticale (42) de la plaque dorsale (2),
- et la plaque dorsale (2) présente, dans la direction verticale (42) de l'axe de plaque (41), au moins une première partie de plaque supérieure (43) et au moins une deuxième partie de plaque inférieure (44), qui sont disposées l'une derrière l'autre dans la direction verticale (42) de l'axe de plaque (41),
- et avec une volute de soufflerie (10) qui présente une sortie d'air soufflé (11),
- dans lequel la volute de soufflerie (10) présente une première face frontale axiale (20) tournée vers la plaque dorsale (2),
- et avec un moteur électrique (30) disposé sur la première face frontale axiale (20) de la volute de soufflerie (10) avec un arbre d'entraînement (34) qui est relié à une roue de soufflerie (8) tournant dans la volute de soufflerie (10),
- et avec au moins un bloc-batterie (50.1, 50.2) pour faire fonctionner le moteur électrique (30),
**caractérisé en ce que**
- deux blocs-batterie (50.1, 50.2) sont prévus pour le fonctionnement de l'appareil de soufflage électrique, chacun étant disposé sur un côté vertical de l'axe de plaque (41),
- chaque bloc-batterie disposé (50.1, 50.2) étant maintenu dans son propre puits de boîtier (51),
- un espace de réception (45) pour les blocs-batterie (50.1, 50.2) étant formé entre la première partie de plaque supérieure (43) de la plaque dorsale (2) et la volute de soufflerie (10),
- et les puits de boîtier (51) pour le bloc-batterie (50.1, 50.2) étant maintenus dans l'espace de réception (45),
- les deux blocs-batterie (50.1, 50.2) étant disposés côte à côte,
- dans la vue arrière, un bloc-batterie (50.1) étant situé d'un côté de l'axe de plaque (41) s'étendant centralement,
- et un bloc-batterie (50.2) étant situé de l'autre côté de l'axe de plaque (41) s'étendant centralement, chaque puits de boîtier (51) présentant une ouverture d'insertion (52) qui est tournée à l'opposé du moteur électrique (30).

2. Appareil de soufflage selon la revendication 1,
**caractérisé en ce que** chaque puits de boîtier (51) présente un axe vertical (53) s'étendant à travers l'ouverture d'insertion (52), et l'axe vertical (53) est situé à un angle d'inclinaison spatiale (54) par rapport à l'axe de plaque (2).

3. Appareil de soufflage selon la revendication 2,
**caractérisé en ce que**, en vue de dessus de la plaque dorsale (2), l'axe vertical (53) de chaque puits de boîtier (51) est incliné latéralement par rapport à l'axe de plaque (41) selon un premier angle d'inclinaison (56).

4. Appareil de soufflage selon la revendication 2 ou 3,
**caractérisé en ce que** la plaque dorsale (2) définit un plan (23) et l'axe vertical (53) de chaque puits de boîtier (51) est incliné par rapport au plan de la plaque dorsale (2) selon un deuxième angle d'inclinaison (58).

5. Appareil de soufflage selon l'une des revendications 2 à 4,
**caractérisé en ce que** le premier et/ou le deuxième angle d'inclinaison (56, 58) se situe dans une plage comprise entre 2° et 15°.

6. Appareil de soufflage selon l'une des revendications 2 à 5,
**caractérisé en ce que** le premier et/ou le deuxième angle d'inclinaison (56, 58) se situe dans une plage comprise entre 5° et 10°, en particulier l'angle d'inclinaison (56, 58) est de 10°.

7. Appareil de soufflage selon l'une des revendications 1 à 6,
**caractérisé en ce que** la volute de soufflerie (10) est inclinée par rapport à la plaque dorsale (2) selon un angle de boîtier (32) de telle sorte que la volute de soufflerie (10) présente une distance plus grande (o) par rapport à la première partie de plaque supérieure (43) de la plaque dorsale (2) que la distance (u) que la volute de soufflerie (10) présente par rapport à la deuxième partie de plaque inférieure (44) de la plaque dorsale (2).

8. Appareil de soufflage selon la revendication 7,
**caractérisé en ce que** les puits de boîtier (51) sont disposés dans la zone spatiale (57) avec la plus grande distance (o) de la volute de soufflerie (10) par rapport à la plaque dorsale (2).

9. Appareil de soufflage selon l'une des revendications 1 à 8,
**caractérisé en ce que** l'ouverture d'insertion (52) et les puits de boîtier (51) déterminent une direction d'insertion (55) pour le bloc-batterie (50.1, 50.2), la direction d'insertion (55) s'étendant dans la direction verticale (42) de la plaque dorsale (2).

10. Appareil de soufflage selon l'une des revendications 1 à 9,
**caractérisé en ce que** les puits de boîtier (51) sont fixés à la plaque dorsale (2).

11. Appareil de soufflage selon l'une des revendications 1 à 10,
**caractérisé en ce que** les puits de boîtier (51) sont fixés à la plaque dorsale (2) par l'intermédiaire d'un élément anti-vibration (60).

12. Appareil de soufflage selon l'une des revendications 1 à 11,
**caractérisé en ce que** les puits de boîtier (51) sont fixés à la volute de soufflerie (10).

13. Appareil de soufflage selon l'une des revendications 1 à 12,
**caractérisé en ce que** les puits de boîtier (51) sont fixés à la volute de soufflerie (10) par l'intermédiaire d'un élément anti-vibration (60).

14. Appareil de soufflage selon l'une des revendications 1 à 13,
**caractérisé en ce que** la volute de soufflerie (10) est fixée à la plaque dorsale (2) par l'intermédiaire d'un élément anti-vibration (60).
